# EUROPEAN PATENT SPECIFICATION

(11) **EP 3 385 225 B1**
(45) Date of publication and mention of the grant of the patent: **16.11.2022**
(21) Application number: 17849173.4
(22) Date of filing: 12.09.2017
(51) Int. Cl.: C01B 33/145, C01B 33/155, C01B 33/157, C01B 33/154, C01B 33/158

(54) **METHOD FOR MANUFACTURING SILICA AEROGEL**
VERFAHREN ZUR HERSTELLUNG VON SILICA-AEROGEL
PROCÉDÉ DE FABRICATION D'AÉROGEL DE SILICE

(30) Priority: 12.09.2016 KR 20160117519; 11.09.2017 KR 20170115904
(43) Date of publication of application: 10.10.2018
(73) Proprietor: LG Chem, Ltd., Seoul 07336 (KR)
(72) Inventor: KIM, Young Hun, Daejeon 34122 (KR); LEE, Je Kyun, Daejeon 34122 (KR)
(74) Representative: Goddar, Heinz J.
(86) International application number: PCT/KR2017/010004
(87) International publication number: WO 2018/048289

(56) References cited:
- EP-A1- 2 930 147
- WO-A1-2008/117995
- KR-A- 20100 010 350
- KR-A- 20100 053 350
- KR-A- 20120 070 948
- KR-A- 20150 093 063
- US-A- 5 789 495
- US-A1- 2008 081 014
- US-A1- 2009 247 655

## Description

### TECHNICAL FIELD

### Technical Field

The present invention relates to a method for producing a silica aerogel.

### BACKGROUND ART

An aerogel is a superporous, high specific surface area (≥500 m²/g) material having a porosity of about 90 to 99.9% and a pore size in the range of 1 to 100 nm, and is a material excellent in ultra-light weight, super thermal insulation, ultra-low dielectric, and the like. Accordingly, research on the development of aerogel materials as well as research on the practical use thereof as transparent insulation materials, environmentally friendly high temperature insulation materials, ultra-low dielectric thin films for highly integrated devices, catalysts and catalyst carriers, electrodes for supercapacitors, and electrode materials for seawater desalination have been actively studied.

The biggest advantage of the aerogel is that the aerogel has a super-insulation exhibiting a thermal conductivity of 0.300 W/m·K or less, which is lower than that of an organic insulation material such as conventional Styrofoam, and that fire vulnerability and the occurrence of harmful gases in case of fire which are fatal weaknesses of the organic insulation material can be solved.

In general, the aerogel is produced by producing a hydrogel from a silica precursor such as water glass and alkoxysilane series (TEOS, TMCS, MTMS, etc.), and removing a liquid component inside the hydrogel without destroying a microstructure. The typical form of a silica aerogel may be classified into three types, i.e., powder, granule, and monolith, and the silica aerogel is generally produced in the form of powder.

Meanwhile, when the silica aerogel absorbs moisture, the characteristics and physical properties of a gel structure are deteriorated. Therefore, in order to easily use the silica aerogel in industries, a method which is capable of permanently preventing moisture in the air from being absorbed is required. Accordingly, methods for producing a silica aerogel having permanent hydrophobicity by hydrophcbizing the surface thereof have been proposed.

Accordingly, the silica aerogel is generally produced by a sol-gel method in which sol formation, hydrogel formation, aging, solvent exchange, surface modification, and drying are carried out.

However, the sol-gel method requires a very complicated process and requires much cost and time, thus deteriorating the productivity and economical efficiency of the silica aerogel. Therefore, it is required to develop a novel method for producing a silica aerogel of which physical properties are excellent and are readily controllable through a simpler process.

### [Prior Art Document]

[Patent Document 1] Korean Patent Application Publication No. 10-2015-0093123 (published on August 17, 2015)

WO2008/117995A1 and US5789495A disclose a method for producing a silica aerogel, comprising: adding HC1 and a first sodium silicate solution to a reactor to prepare a water glass dispersion solution for forming silica colloid particles, adding polyethylene glycol to the water glass dispersion solution for forming silica colloid particles, to form silica colloid particles, adding a second sodium silicate solution for forming a wet gel to the reactor including the silica colloid particles to form a silica wet gel which after addition has a pH of 5 and thereby at the same time mixing an acid catalyst with a second sodium silicate solution, and drying the silica wet gel.

### DISCLOSURE OF THE INVENTION

### TECHNICAL PROBLEM

An aspect of the present invention provides a method for producing a silica aerogel of which mechanical properties are improved to enhance a specific surface area and pore characteristics, and physical properties are readily controllable by using a two-step process, which includes a nucleation step of forming silica colloid particles by using a low-concentration silica precursor and a growth step of further adding a relatively high-concentration silica precursor to grow a silica wet gel by using the silica colloid particles as a seed.

### TECHNICAL SOLUTION

An aspect of the present invention provides a method for producing a silica aerogel, comprising: 1) adding an acid catalyst and a first water glass solution to a reactor to prepare a water glass dispersion solution for forming silica colloid particles, wherein the concentration of a silicon dioxide in the first water glass solution is 0.01 to 2 wt%; 2) adding a surface modifier solution to the water glass dispersion solution for forming silica colloid particles, to form silica colloid particles; 3) mixing an acid catalyst with a second water glass solution to prepare a water glass dispersion solution for forming a silica wet gel, wherein the concentration of a silicon dioxide in the second water glass solution is 1 to 11 wt%; 4) adding the water glass dispersion solution for forming a wet gel to the reactor including the silica colloid particles to form a silica wet gel; and 5) drying the silica wet gel, wherein the concentration of a silicon dioxide in the second water glass solution is equal to or greater than the concentration of a silicon dioxide in the first water glass solution.

Further embodiments are disclosed in the dependent claims

### ADVANTAGEOUS EFFECTS

A method for producing a silica aerogel according to the present invention uses a two-step process of a nucleation step of forming silica colloid particles and a growth step of forming a silica wet gel by using the silica colloid particles as a seed, and is thus capable of forming a silica aerogel of which mechanical stability is improved to enhance specific surface area and pore characteristics.

In addition, there is an effect in that gelation, solvent exchange, and surface modification may be simultaneously performed during a single step, and thus the production time is shortened to provide excellent productivity and economical efficiency.

In addition, there is an effect that the physical properties of a silica aerogel may be controlled by adjusting the concentration of a silica precursor to be added in each step.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

In general, in the production of a silica aerogel, drying technology for removing a solvent while maintaining a pore structure without any change and mass production technology having economical efficiency are the most essential technologies.

A silica wet gel produced by using water glass is shaped such that pores thereof are filled with water which is a solvent. Simply drying and removing the solvent, causes a pore structure to easily shrink and crack due to a solvent extraction rate difference and a capillary force caused by a high surface tension of water at the gas/liquid interface while the solvent in a liquid phase is vaporized to a gas phase. This leads to a reduction in surface area and a change in pore structure. Thus, in order to maintain the pore structure of the wet gel, it is necessary to exchange water having a relatively high surface tension with an organic solvent having a relatively low surface tension, and also a technique is required which is capable of washing and drying the wet gel without shrinkage while maintaining the structure of the wet gel without any change.

In addition, the dried silica aerogel maintains a low thermal conductivity just after drying, but absorbs water in the air due to the hydrophilicity of a silanol group (Si-OH) on the silica surface, so that there is a disadvantage that the nanopore structure is shrunk due to the condensation reaction of the silanol group, and the thermal conductivity gradually increases. Therefore, in order to maintain a low thermal conductivity, the surface of the silica aerogel needs to be modified to have a hydrophobicity. Accordingly, a method for modifying the surface of the silica aerogel so as to have a hydrophobicity by using a surface modifier is widely used. However, there is a problem in that a high unit price of the surface modifier and a difficulty in controlling the surface modification reaction result in poor productivity.

Therefore, many studies have been conducted on a simpler process for producing a silica aerogel by adding and synthesizing a silica precursor, a surface modifier, and an organic solvent to a single reactor.

However, the above production method has a disadvantage in that all reactants are added at once and reacted, and it is thus difficult to control the physical properties of the finally produced silica aerogel. In addition, the mechanical properties are weakened since gel formation and surface modification reaction are occur at the same time.

Accordingly, the present invention provides a silica aerogel producing method, which is excellent in productivity and economical efficiency, and by which the mechanical properties of the silica aerogel may be enhanced and the specific surface area and the pore properties are improved, so that physical properties are readily controllable.

Hereinafter, a method for producing a silica aerogel according to an embodiment of the present invention will be described in detail.

A method for producing a silica aerogel according to an embodiment of the present invention includes: 1) adding an acid catalyst and a first water glass solution to a reactor to prepare a water glass dispersion solution for forming silica colloid particles, wherein the concentration of a silicon dioxide in the first water glass solution is 0.01 to 2 wt%) adding a surface modifier solution to the water glass dispersion solution for forming silica colloid particles, to form silica colloid particles; 3) mixing an acid catalyst with a second water glass solution to prepare a water glass dispersion solution for forming a silica wet gel, wherein the concentration of a silicon dioxide in the second water glass solution is 1 to 11 wt%; 4) adding the water glass dispersion solution for forming a wet gel to the reactor including the silica colloid particles to form a silica wet gel; and 5) drying the silica wet gel, wherein the concentration of a silicon dioxide in the second water glass solution is equal to or greater than the concentration of a silicon dioxide in the first water glass solution.

Step 1) according to an embodiment of the present invention is a step of preparing a water glass dispersion solution for forming silica colloid particles, and may be specifically a step of adding the acid catalyst and the first water glass solution to the reactor.

The reactor may be a reactor having a stirrer, and the reaction may be performed while stirring. The stirring is not particularly limited, but may be performed, for example, at a speed of 50 rpm to 700 rpm, and the temperature in the reactor may be maintained at 25°C to 95°C.

The acid catalyst is mixed with silicon dioxide in the water glass solution in the water glass dispersion solution for forming silica colloid particles, and serves to hydrate the silica precursor from a low pH. In addition, the acid catalyst may serve to react with a surface modifier in a surface modifier solution to be described later and to activate the decomposition of the surface modifier. Accordingly, the surface modification reaction is improved and the generation of ammonia is promoted to raise pH, so that the condensation reaction may occur from the hydrated water glass to induce the formation of silica colloid particles.

The acid catalyst may be at least one selected from the group consisting of nitric acid, hydrochloric acid, sulfuric acid and hydrofluoric acid, and specifically may be nitric acid, wherein the acid catalyst may be added in a molar ratio of 1 to 5, compared to the silicon dioxide in the first water glass solution. By adding the acid catalyst, the water glass dispersion solution for forming silica colloid particles may be formed to have the condition of an acidity (pH) being 0 to 4.

The first water glass solution may be a diluted solution which is a mixture obtained by adding distilled water to water glass, and the water glass may be sodium silicate (Na₂SiO₃), which is an alkali silicate salt obtained by meting silicon dioxide (SiO₂) and alkali.

The first water glass solution contains 0.01 to 2 wt% of silicon dioxide (SiO₂). When silicon dioxide in the first water glass solution is contained in an amount lower than the above range, silica colloid particles are not properly formed or the number of the formed particles may be too small to appropriately play a role of a seed for the silica wet gel. When silicon dioxide in the first water glass solution is contained in an amount higher than the above range, the silica wet gel is immediately formed without forming the silica colloid particles serving as the seed, so that it is difficult to apply the production method of the present invention in which the two-step process of nucleation and growth are performed.

Step 2) according to an embodiment of the present invention, which is a step of forming silica colloid particles, may be a nucleation step. Silica colloid particles are formed by adding the surface modifier solution to the water glass dispersion solution for forming silica colloid particles and carrying out a reaction.

Generally, in the case of mixing a water glass solution, an acid catalyst, and a surface modifier solution, a network structure may be formed from a silica precursor material so that a gelation forming the silica wet gel may be initiated.

Here, the network structure may be a planar mesh structure in which specific polygons having one or more types of atomic arrangement are linked to each other, or a structure in which specific polyhedrons share their vertices, edges, faces, etc., with each other to form a three dimensional skeleton structure.

However, since the first water glass solution added in step 1) of the present invention is extremely low in concentration, only the silica colloid particles may be formed without gelation which is finally caused by the reaction between the acid catalyst and the surface modifier solution.

The silica colloid particles indicate dispersed silica fine particles which are larger than normal molecules or ions and have a diameter of about 1 nm to 1000 nm. In the production method of the present invention, the silica colloid particles may serve as a seed for producing a silica aerogel which is a final product.

Thereafter, the silica precursor and the acid catalyst are further added at a relatively high concentration, and thus the silica wet gel may be grown by using the silica colloid particles as a seed to strengthen mechanical and structural stability of the finally-produced silica aerogel.

The surface modifier solution may be produced by adding the surface modifier to a nonpolar organic solvent and then mixing. In this case, the concentration of the surface modifier in the surface modifier solution may be 0.1 to 4M. That is, the surface modifier solution may be produced by adding 0.1 to 4M of the surface modifier to the nonpolar organic solvent and then mixing.

The surface modifier may be at least one selected from the group consisting of trimethylchlorosilane (TMCS), hexamethyldisilazane (HMDS), methyltrimethoxysilane, trimethylethoxysilane, ethyltriethoxysilane, and phenyltriethoxysilane, and more specifically, may be hexamethyldisilazane (HMDS).

The nonpolar organic solvent may be at least one selected from the group consisting of hexane, heptane, toluene and xylene.

In addition, the surface modifier solution may be added in an amount such that the molar ratio of the surface modifier to the silicon dioxide in the first water glass solution becomes 0.05 to 20, more preferably 0.5 to 10. When the surface modifier solution is added in an amount such that the molar ratio is less than 0.05, the amount of the surface modifier capable of reacting with a silanol group (Si-OH) is relatively smaller than the amount of the silanol group (Si-OH) in the water glass solution, thereby causing silica colloid particles not to be readily formed and the surface modification reactivity to be lowered. Therefore, the silanol group which is not surface-modified during drying involves in a condensation reaction, so that the pore size of the finally produced silica aerogel may become small, and a porous structure may not be achieved. In addition, when the surface modifier solution is added in an amount such that the molar ratio is more than 20, there exists a large amount of residual surface modifiers not participating in the surface modification reaction, so that expensive surface modifier may be wasted and economical efficiency may thus be poor.

Step 3) according to an embodiment of the present invention is a step of preparing a water glass dispersion solution for forming a silica wet gel, wherein the water glass dispersion solution may be prepared by adding the second water glass solution to the acid catalyst.

The acid catalyst acts the same role as the acid catalyst used in step 1), which may have the same or different types and concentrations.

The second water glass solution contains 1-11 wt% of silicon dioxide (SiO₂). When silicon dioxide in the second water glass solution is contained in an amount lower than the above range, a silica precursor may be insufficient to be difficult to grow into the silica wet gel by using the previously produced silica colloid particles as a seed. When the silicon dioxide is contained in an amount higher than the above range, the pore structure of the produced silica wet gel may be reduced, and thus the specific surface area may be excessively lowered.

Step 4) according to an embodiment of the present invention, which is a step of forming the silica wet gel, may be a growth step of growing silica colloid particles into a silica wet gel. Specifically, the silica wet gel may be prepared by reacting with the water glass dispersion solution for forming a silica wet gel added to the reactor.

Specifically, when the water glass dispersion solution for forming a silica wet gel is added to the reactor including a surface modifier solution and silica colloid particles, the gelation, solvent exchange, and surface modification reaction may be simultaneously performed. Accordingly, the production method of the present invention has a short production time, and thus the productivity and the economical efficiency may be excellent.

Specifically, when the water glass dispersion solution for forming a silica wet gel hydrated by the acid catalyst is added to the reactor including silica colloid particles under neutral or basic conditions, the pH of the water glass dispersion solution for forming a silica wet gel is raised to neutral or basic conditions to lead to the gelation. Further, the decomposition of the surface modifier which does not react in the reaction for forming silica colloid particles may be additionally activated, thereby growing the surface-modified silica wet gel by using silica colloidal particles as a seed.

In addition, the solvent exchange of the silica wet gel may be performed by the nonpolar organic solvent included in the surface modifier solution, and at the same time, the surface modification reaction of the silica wet gel may be promoted.

When gelation and surface modification are simultaneously performed as described above, the efficiency of the surface modification is higher than that in the case in which surface modification is performed subsequently after gelation. Thus, there may be another advantage in that a silica aerogel having high hydrophobicity may be produced.

Therefore, in step 4), the silica wet gel is grown by using the previously produced silica colloid particles as a seed, and at the same time, solvent exchange and surface modification may be performed to form a hydrophobic silica wet gel.

In addition, in order to produce the mechanically-stabilized silica aerogel as described above, silica colloid particles serving as a seed are produced from a low-density silica precursor, and then a high-density silica precursor is added thereto to form a silica wet gel by using silica colloid particles as a seed. Therefore, in order to form a silica aerogel having the improved mechanical and structural stability, the concentration ratio of the silicon dioxide in the first water glass solution for preparing a water glass dispersion solution for forming silica colloid particles with respect to the silicon dioxide in the second water glass solution for preparing a water glass dispersion solution for forming a silica wet gel is required to be controlled in an appropriate range.

AS described above, specifically, the concentration of the silicon dioxide in the second water glass solution is equal to or larger than the concentration of the silicon dioxide in the first water glass solution, and more specifically, the silicon dioxide in the first water glass solution and the second water glass solution may be adjusted such that the concentration ratio therebetween becomes 1:1 to 1:1100, specifically 1:1 to 1:100, more specifically 1:1 to 1:50. When the concentration of the second water glass solution is lower than the above range, the silica wet gel may not be grown; and when the concentration of the second water glass solution is higher than the above range, the total amount of silica becomes higher than the proportion of silica colloid particles, and thus the pore fraction of the finally formed silica aerogel may be reduced.

According to the present invention, a silica aerogel is produced through the two steps, i.e., the nucleation step of forming silica colloid particles and the growth step of forming a silica wet gel by using the silica colloid particles as a seed. Thus, the silica aerogel having more mechanical stability and more excellent physical properties such as a pore characteristic, a specific surface area, and a tap density may be produced in comparison with the conventional method for producing a silica aerogel by adding the silica precursor at a time. Also, the physical properties of the finally produced silica aerogel such as a tap density, a specific surface area, the volume and size of pores, and a carbon content depending on the surface-modified fraction may be easily controlled by adjusting the concentration ratio between the water glass solutions serving as silica precursors to be added in respective steps.

Meanwhile, the production method of the present invention may further include a step of adding ammonium hydroxide during step 4) in order to further promote the galation and the surface modification reaction.

Specifically, the ammonium hydroxide may be added after the total amount of the surface modifier solution used in the reaction is added to the reactor, and more specifically, the ammonium hydroxide may be involved in the reaction by being added at a time when the pH in the reactor reaches 5 to 10 after the total amount of the surface modifier solution is added to the reactor, or may be involved in the reaction by being added after the solvent exchange is completed.

In this case, the time when the pH reaches the above range may vary with the concentration of silicon dioxide in the second water glass solution. For example, when the concentration of silicon dioxide in the second water glass solution is 3 to 8 wt%, the time may be 30±3 minutes just after the total amount of the surface modifier solution is added to the reactor.

In addition, the time when the solvent exchange is completed indicates a time when the liquid filling pores in the silica wet gel is exchanged with an organic solvent used in water, and may be observed from whether the silica wet gel is dispersed or not when the silica wet gel generated during the reaction is extracted and placed into a water phase or an organic solvent phase.

In addition, the added amount of the ammonium hydroxide is not particularly limited as long as the gelation and the surface modification reaction may be readily carried out without causing problems due to other additional reactions. However, for example, the ammonium hydroxide may be added in an amount such that the pH in the reactor after the addition of ammonium hydroxide is increased by 5% to 57% of the pH in the reactor before the addition thereof. For instance, when the pH in the reactor before the addition of the ammonium hydroxide is 7, the ammonium hydroxide may be added in an amount such that the pH in the reactor becomes 7.35 to 11.

Specifically, the ammonium hydroxide may be added, within an amount adjustable to meet the pH range above, in an amount such that the molar ratio of the ammonium hydroxide to the silicon dioxide in the second water glass solution becomes 0.5 to 25.

As described above, the production method according to an embodiment of the present invention may improve the surface modification reaction by further adding ammonium hydroxide during the reaction of step 4) and involving in the reaction. Thus, the silica aerogel having high hydrophobicity may be produced without using a large amount of the expensive surface modifier.

In step 5) according to an embodiment of the present invention, a step of drying a silica wet gel may be performed to form a silica aerogel.

In this case, the production method according to an embodiment of the present invention may further include performing a washing step before the drying step. The washing, which is for removing impurities (sodium ions, unreacted substances, by-products, etc.) generated during the reaction to obtain a hydrophobic silica aerogel with high purity, may be performed through a dilution process or an exchange process using a nonpolar organic solvent.

Specifically, the dilution process may indicate a solvent dilution process, and may be a process in which a nonpolar organic solvent may be further added to the reactor after the reaction of step 4) to allow the excessive amount of the nonpolar organic solvent to be present in the reactor. In addition, the exchange process may indicate a solvent exchange process, and may be a process in which steps of discharging an aqueous solution layer in the reactor after the reaction of step 4), then introducing the nonpolar organic solvent, and discharging again the separated aqueous solution layer are repeatedly performed.

More specifically, the production method according to an embodiment of the present invention may be performed by additionally adding the nonpolar organic solvent to the silica wet gel, and then stirring the resultant mixture for 20 minutes to 1 hour.

The drying step in the production method according to an embodiment of the present invention may be performed by a supercritical drying process or an ambient drying process, and more specifically, may be performed by using the ambient drying process under the conditions of a temperature of 100 to 190°C for 1 hour to 4 hours.

Thus, the production method according to an embodiment of the present invention is advantageous in that there is no need of an expensive high-pressure apparatus, and drying may thus be performed for a shorter time within 6 hours at a lower production cost than as in case of using the conventional supercritical process, thereby improving the productivity and economical efficiency of the silica aerogel.

Meanwhile, the ambient drying process may be disadvantageous in that the pore structure is easily shrunk and cracked due to a high capillary force and a difference in solvent extraction speed. However, the silica aerogel produced by the production method of the present invention may have particularly enhanced mechanical properties, and thus the wet gel may be dried without shrinkage while maintaining the structure of the wet gel without any change. Accordingly, there is a significance in that the disadvantage of the ambient drying process may be solved.

In addition, provided is a hydrophobic silica aerogel produced by the production method.

The hydrophobic silica aerogel is characterized by having a specific surface area of 600 m²/g to 1,000 m²/g, and the hydrophobic silica aerogel may have a tap density of 0.03 to 0.4 g/ml.

As described above, in the method for producing a silica aerogel according to an embodiment of the present invention, a silica aerogel is produced by a two-step process including a nucleation step of forming silica colloid particles and a growth step of forming a silica wet gel by using the silica colloid particles as a seed, so that the silica aerogel may have more mechanical stability and more excellent physical properties such as a pore characteristic, a specific surface area, and a tap density in comparison with that of the conventional method in which a silica aerogel is produced by adding the silica precursor at a time. Also, the physical properties of the finally produced silica aerogel such as a tap density, a specific surface area, the volume and size of pores, and a carbon content depending on the surface-modified fraction may be easily controlled by adjusting the concentration ratio between the water glass solutions serving as silica precursors to be added in respective steps. Therefore, this method is expected to be widely used in the related industrial fields.

Hereinafter, examples of the present invention will be described in detail so that those skilled in the art can easily carry out the present invention. The present invention may, however, be embodied in many different forms and is not limited to the examples set forth herein.

### Example 1

1.5 g of a nitric acid was previously prepared in a beaker, and a 0.5 wt% of a first water glass solution (1.7 g of water glass) is added in a volume of 100 ml to prepare a water glass dispersion solution for forming silica colloid particles. The dispersion solution was then added to a reactor at 55°C and stirred to maintain the temperature.

Thereafter, a surface modifier solution, which was obtained by adding 10 g of hexamethyldisilazane (HMDS) to 200 ml of n-hexane and stirring, was added into the reactor and reacted to produce silica colloid particles.

6.5 g of a nitric acid was previously prepared in another beaker, and a 4 wt% of a second water glass solution (12.4 g of water glass) is added in a volume of 100 ml to prepare a water glass dispersion solution for forming a silica wet gel.

The water glass dispersion solution for forming a wet gel is added to the reactor including the silica colloid particles and causing a reaction to grow the silica wet gel.

After initiation of the reaction, the silica wet gel in an aqueous solution layer was surface-modified and floated onto the top of the organic solvent layer of n-hexane. Then, in order to adjust the degree of surface modification, 3 ml of ammonium hydroxide was added at 30 minutes after the addition of the water glass solution for forming a wet gel surface modifier solution. When the surface modification was completed and a hydrophobic silica wet gel was completely floated onto the organic solvent layer of the n-hexane, 400 ml of n-hexane was further added, and then the aqueous solution layer remaining in the lower portion of the reactor was discharged through an outlet of the reactor. After 2 hours, the silica wet gel dispersed in an n-hexane layer was completely dried in a forced convection oven at 150°C for 6 hours to produce a hydrophobic silica aerogel.

### Examples 2 to 5

Silica aerogels were produced in the same manner as in Example 1, except that first and second water glass solutions, and a nitric acid were used in respective amounts described in Table 1 below.

### Comparative Example 1

Silica aerogels were produced in the same manner as in Example 1, except that 8 g of a nitric acid, 4.5 wt% of a water glass solution (14.1 g of water glass), and a surface modifier solution were added at a time.

### Comparative Examples 2 to 5

Silica aerogels were produced in the same manner as in Example 1, except that first and second water glass solutions and a nitric acid were used in respective amounts described in Table 1 below.

### Experimental Example 1: Tap Density Measurement

For comparative analysis of physical properties of hydrophobic silica aerogels produced in Examples 1 to 5 and Comparative Examples 1 to 5, the tap density (g/ml) and the specific surface area (BET, m²/g) of each aerogel were measured, and the results were shown in Table 1 below.

### 1) Tap Density (g/ml)

Tap density was measured by using a tap density measuring instrument (STAV II, Engelsman AG). Specifically, each of the aerogels was placed into a standardized cylinder (25 ml) and weighted, then the cylinder was fixed to the tap density measuring instrument, a noise damping hood was closed, and 2500-times tapping was set. After the tapping measurement, the volume of each aerogel in the cylinder was measured, and a ratio of the previously measured weight to the above volume was calculate to measure the density.

### 2) Specific surface area (BET, m²/g)

The specific surface area was analyzed by the adsorption/desorption amount of nitrogen according to partial pressure (0<p/p₀<1) by using a 3FLEX apparatus (Micrometrics Company).

Specifically, 100 mg of each aerogel was placed in a cylinder and pretreated at 200°C for 8 hours, and then measured by using a specific surface area measuring apparatus.

**[Table 1]**

| | Nucleation step | | Growth step | | Surface modifier (g) | Tap density (g/ml) | BET (m2/g) |
|---|---|---|---|---|---|---|---|
| | Silicon dioxide (wt%) | Nitric acid (g) | Silicon dioxide (wt%) | Nitric acid (g) | | | |
| Comparative Example 1 | 4.5 | 8 | - | - | 10 | 0.112 | 589 |
| Comparative Example 2 | 0.005 | 1.5 | 4.445 | 6.5 | 10 | 0.118 | 557 |
| Comparative Example 3 | 2.1 | 1.5 | 2.4 | 6.5 | 10 | 0.231 | 327 |
| Comparative Example 4 | 0.5 | 1.5 | 0.5 | 6.5 | 10 | 0.283 | 225 |
| Comparative Example 5 | 0.5 | 1.5 | 12 | 6.5 | 10 | 0.320 | 232 |
| Example 1 | 0.5 | 1.5 | 4 | 6.5 | 10 | 0.113 | 684 |
| Example 2 | 0.1 | 1.5 | 4.4 | 6.5 | 10 | 0.107 | 653 |
| Example 3 | 0.2 | 1.5 | 4.3 | 6.5 | 10 | 0.105 | 672 |
| Example 4 | 1 | 1.5 | 3.5 | 6.5 | 10 | 0.115 | 621 |
| Example 5 | 1.5 | 1.5 | 3 | 6.5 | 10 | 0.114 | 62 5 |

As shown in Table 1, it may be ascertained that as compared with the hydrophobic silica aerogel of Comparative Example 1 in which the same amount of silica precursor as in Example was added, the hydrophobic silica aerogel of Examples 1 to 5 produced by the production method according to an embodiment of the present invention exhibited a high specific surface area as a whole while maintaining the tap density in the same or similar level.

In addition, it can be seen that even if the silica precursor was added in two steps as in the present invention, when the concentrations of the first and second water glass solutions fall outside the numerical range of the present invention as in Comparative Examples 2 to 4, the effect of improving the tap density and specific surface area is not good.

This is because an excessively low concentration of the first water glass causes the silica colloid particles not to be formed properly or the number of formed particles to be too small to properly serve as a seed of the silica wet gel, and an excessively high concentration of the first water glass causes the silica wet gel to be immediately formed instead of forming the silica colloid particles serving as a seed, which is not different from a one-step adding process.

In addition, this is because an excessively low concentration of the second water glass solution causes the silica precursor to be insufficient and the colloid particles to be used as a seed to hardly grow the silica wet gel, and an excessively high concentration of the second water glass solution causes the pore structure of the produced silica wet gel to reduce and the specific surface area to excessively lower.

The above results show that the silica aerogel was produced by a two-step process of a nucleation step of forming silica colloid particles by using a low-concentration silica precursor in the specific range of the present invention and a growth step of forming a silica wet gel by using the silica colloid particles as a seed by adding a relatively high-concentration silica precursor, so that the mechanical stability was improved and the pore characteristics was improved.

## Claims

1. A method for producing a silica aerogel, comprising:
1) adding an acid catalyst and a first water glass solution to a reactor to prepare a water glass dispersion solution for forming silica colloid particles, wherein the concentration of a silicon dioxide in the first water glass solution is 0.01 to 2 wt%;
2) adding a surface modifier solution to the water glass dispersion solution for forming silica colloid particles, to form silica colloid particles;
3) mixing an acid catalyst with a second water glass solution to prepare a water glass dispersion solution for forming a silica wet gel, wherein the concentration of a silicon dioxide in the second water glass solution is 1 to 11 wt%;
4) adding the water glass dispersion solution for forming a wet gel to the reactor including the silica colloid particles to form a silica wet gel; and
5) drying the silica wet gel,
wherein the concentration of a silicon dioxide in the second water glass solution is equal to or greater than the concentration of a silicon dioxide in the first water glass solution.

2. The method of claim 1, wherein the concentration ratio of a silicon dioxide in the first water glass solution to a silicon dioxide in the second water glass solution is 1:1 to 1:1100.

3. The method of claim 1, wherein the acid catalyst is at least one selected from the group consisting of nitric acid, hydrochloric acid, sulfuric acid and hydrofluoric acid.

4. The method of claim 1, wherein the surface modifier solution is a solution in which a surface modifier is added to a nonpolar organic solvent.

5. The method of claim 1, wherein the surface modifier is at least one selected from the group consisting of trimethylchlorosilane (TMCS), hexamethyldisilazane (HMDS), methyltrimethoxysilane, trimethylethoxysilane, ethyltriethoxysilane, and phenyltriethoxysilane.

6. The method of claim 1, wherein the nonpolar organic solvent is at least one selected from the group consisting of hexane, heptane, toluene, and xylene.

7. The method of claim 1, wherein the surface modifier solution is added in an amount such that a molar ratio of a surface modifier to a silicon dioxide in the first water glass solution becomes 0.05 to 20.

8. The method of claim 1, wherein gelation, solvent exchange, and surface modification are simultaneously performed by step 4).

9. The method of claim 1, wherein the silica wet gel is grown by using the silica colloid particles as a seed.

10. The method of claim 1 further comprising, during step 4), a step of adding ammonium hydroxide (NH₄OH).

11. The method of claim 1, wherein the ammonium hydroxide is added in an amount such that a molar ratio of the ammonium hydroxide to a silicon dioxide in the second water glass solution becomes 0.5 to 25.

## Patentansprüche

1. Verfahren zum Herstellen eines Silikaaerogels, umfassend:
1) Zufügen eines sauren Katalysators und einer ersten Wasserglaslösung zu einem Reaktor, um eine Wasserglasdispersionslösung zum Bilden von Silikakolloidteilchen herzustellen, wobei die Konzentration eines Siliziumdioxids in der ersten Wasserglaslösung 0,01 bis 2 Gewichtsprozent ist;
2) Zufügen einer Oberflächenmodifizierungsmittellösung zu der Wasserglasdispersionslösung zum Bilden von Silikakolloidteilchen, um Silikakolloidteilchen zu bilden;
3) Mischen eines sauren Katalysators mit einer zweiten Wasserglaslösung, um eine Wasserglasdispersionslösung zum Bilden eines Silikanassgels herzustellen, wobei die Konzentration eines Siliziumdioxids in der zweiten Wasserglaslösung 1 bis 11 Gewichtsprozent ist;
4) Zufügen der Wasserglasdispersionslösung zum Bilden eines Nassgels zu dem Reaktor, der die Sililkakolloidteilchen einschließt, um ein Silikanassgel zu bilden; und
5) Trocknen des Silikanassgels,
wobei die Konzentration eines Siliziumdioxids in der zweiten Wasserglaslösung gleich oder größer ist als die Konzentration eines Siliziumdioxids in der ersten Wasserglaslösung.

2. Verfahren nach Anspruch 1, wobei das Konzentrationsverhältnis eines Siliziumdioxids in der ersten Wasserglaslösung zu einem Siliziumdioxid in der zweiten Wasserglaslösung 1:1 bis 1:1100 ust.

3. Verfahren nach Anspruch 1, wobei der saure Katalysator wenigstens einer ist, ausgewählt aus der Gruppe bestehend aus Salpetersäure, Chlorwasserstoffsäure, Schwefelsäure und Fluorwasserstoffsäure.

4. Verfahren nach Anspruch 1, wobei die Oberflächenmodifizierungsmittellösung eine Lösung ist, bei der ein Oberflächenmodifzierungsmittel zu einem nicht polaren organischen Lösungsmittel zugegeben wird.

5. Verfahren nach Anspruch 1, wobei das Oberflächenmodifizierungsmittel wenigstens eines ist, ausgewählt aus der Gruppe bestehend aus Trimethylchlorsilan (TMSC), Hexamethyldisilazan (HMDS), Methyltrimethoxysilan, Trimethylethoxysilan, Ethyltriethoxysilan und Phenyltriethoxysilan.

6. Verfahren nach Anspruch 1, wobei das nicht polare organische Lösungsmittel wenigstens eines ist, ausgewählt aus der Gruppe, bestehend aus Hexan, Heptan, Toluol und Xylol.

7. Verfahren nach Anspruch 1, wobei die Oberflächenmodifizierungsmittellösung in einer Menge zugegeben wird, so dass ein Molverhältnis eines Oberflächenmodifizierungsmittels zu einem Siliziumdioxid in der ersten Wasserglaslösung 0,05 bis 20 wird.

8. Verfahren nach Anspruch 1, wobei Gelierung, Lösungsmittelaustausch und Oberflächenmodifikation gleichzeitig durch Schritt 4) durchgeführt werden.

9. Verfahren nach Anspruch 1, wobei das Silikanassgel durch Verwendung der Silikakolloidteilchen als ein Keim gezüchtet wird.

10. Verfahren nach Anspruch 1, weiter umfassend, während Schritt 4), einen Schritt eines Hinzufügens von Ammoniumhydroxid (NH₄OH).

11. Verfahren nach Anspruch 1, wobei das Ammoniumhydroxid in einer Menge zugegeben wird, so dass ein Molverhältnis des Ammoniumhydroxids zu einem Siliziumdioxid in der zweiten Wasserglaslösung 0,5 bis 25 wird.

## Revendications

1. Procédé de production d'un aérogel de silice, comprenant :
1) ajouter à un réacteur un catalyseur acide et une première solution de silicate de sodium pour préparer une solution de dispersion de silicate de sodium pour former des particules de silice colloïdales, dans lequel la concentration d'un dioxyde de silicium dans la première solution de silicate de sodium est de 0,01 à 2 % en poids ;
2) ajouter une solution de modificateur de surface à la solution de dispersion de silicate de sodium pour former des particules de silice colloïdales, afin de former des particules de silice colloïdales ;
3) mélanger un catalyseur acide avec une deuxième solution de silicate de sodium pour préparer une solution de dispersion de silicate de sodium pour former un gel de silice humide, dans lequel la concentration d'un dioxyde de silicium dans la deuxième solution de silicate de sodium est de 1 à 11 % en poids ;
4) ajouter au réacteur la solution de dispersion de silicate de sodium pour former un gel humide comprenant les particules de silice colloïdales pour former un gel de silice humide ; et
5) sécher le gel de silice humide,
dans lequel la concentration d'un dioxyde de silicium dans la deuxième solution de silicate de sodium est égale ou supérieure à la concentration d'un dioxyde de silicium dans la première solution de silicate de sodium.

2. Procédé selon la revendication 1, dans lequel le rapport de concentration d'un dioxyde de silicium dans la première solution de silicate de sodium à un dioxyde de silicium dans la deuxième solution de silicate de sodium est de 1:1 à 1:1100.

3. Procédé selon la revendication 1, dans lequel le catalyseur acide en est au moins un sélectionné parmi le groupe composé d'acide nitrique, d'acide chlorhydrique, d'acide sulfurique et d'acide hydrofluorique.

4. Procédé selon la revendication 1, dans lequel la solution de modificateur de surface est une solution dans laquelle un modificateur de surface est ajouté à un solvant organique non polaire.

5. Procédé selon la revendication 1, dans lequel le modificateur de surface en est au moins un sélectionné parmi le groupe composé de triméthylchlorosilane (TMCS), d'hexaméthyldisilazane (HMDS), de méthyltriméthoxysilane, de triméthyléthoxysilane, d'éthyltriéthoxysilane et de phényltriéthoxysilane.

6. Procédé selon la revendication 1, dans lequel le solvant organique non polaire en est au moins un sélectionné parmi le groupe composé d'hexane, d'heptane, de toluène et de xylène.

7. Procédé selon la revendication 1, dans lequel la solution de modificateur de surface est ajoutée en une quantité telle qu'un rapport molaire d'un modificateur de surface à un dioxyde de silicium dans la première solution de silicate de sodium devient 0,05 à 20.

8. Procédé selon la revendication 1, dans lequel la gélification, l'échange de solvant et la modification de surface sont effectués simultanément par l'étape 4).

9. Procédé selon la revendication 1, dans lequel les particules de silice colloïdales sont utilisées comme un germe pour faire croître le gel de silice humide.

10. Procédé selon la revendication 1, comprenant en outre, durant l'étape 4), une étape consistant à ajouter de l'hydroxyde d'ammonium (NH₄OH).

11. Procédé selon la revendication 1, dans lequel l'hydroxyde d'ammonium est ajouté en une quantité telle qu'un rapport molaire de l'hydroxyde d'ammonium à un dioxyde de silicium dans la deuxième solution de silicate de sodium devient 0,5 à 25.
